# EUROPEAN PATENT APPLICATION

(11) **EP 4 826 671 A1**
(43) Date of publication of application: **21.10.2026**
(21) Application number: 25172512.3
(22) Date of filing: 25.04.2025
(51) Int. Cl.: G06V 10/774, G06V 10/82, G06T 7/00

(54) **METHOD FOR GENERATING TRAINING DATA FOR TRAINING A MACHINE LEARNING MODEL FOR FEATURE IDENTIFICATION IN AN IMAGE**

(30) Priority: 16.04.2025 GR 20250100288
(71) Applicant: Carl Zeiss Industrielle Messtechnik GmbH, 73447 Oberkochen (DE); Carl Zeiss AG, 73447 Oberkochen (DE)
(72) Inventor: TZOUMAS, Stratis, 81379 München (DE); SAGER, Korbinian, 81379 München (DE); FEDOTOV, Dmitrii, 73447 Oberkochen (DE); LUTZWEILER, Christian, 81379 München (DE); WOJEK, Christian, 73447 Oberkochen (DE)
(74) Representative: Pfiz/Gauss Patentanwälte PartmbB

(57) **Abstract**

The invention relates to a computer implemented method for generating training data (54) for training a machine learning model (45) for feature identification in an image comprising: providing a generative machine learning model (40) that uses feature annotations (34) as conditioning input (33) to generate a corresponding image (12), the generative machine learning model (40) being trained using sample data (32) comprising images (12) and corresponding feature annotations (34); modifying feature annotations (34) of the sample data (32); generating training data (54) using the modified feature annotations (42) as conditioning input (33) of the trained generative machine learning model (40), the training data (54) being configured for training a machine learning model (45) for feature identification. The invention also relates to a corresponding computer program, computer-readable medium, data carrier signal and data processing apparatus.

## Description

### Field of the Invention

The invention relates to methods for generating training data for training a machine learning model, in particular for feature identification in an image, e.g., in an image of an object. The machine learning model can, for example, be trained to identify features such as defects in an image of a manufactured object or specific cells in an image of a biological sample. Measurements of the features may be taken to derive quality information about the object or sample.

### Background of the Invention

Industrial or medical inspection applications aim to identify features such as defects or specific characteristics in an inspected sample. Imaging systems, such as optical imaging, microscopy, or X-ray, are commonly used to capture images of these samples. To analyze these samples, machine learning models are often employed. The accuracy of the predictions of the machine learning model depends on the training data. To achieve accurate predictions of the machine learning model, the training data should cover most or almost all of the variations occurring in the inspected samples. In particular, the training data should also cover rarely occurring cases such as rare defects or rare cell types. Therefore, a large amount of versatile training data is required for successfully training a machine learning model that achieves a high accuracy of its predictions. However, providing such an amount of training data is challenging in many industrial inspection cases. Consequently, the performance of machine learning models tends to be poor, in particular in case of rarely occurring features.

Methods for generating training data for machine learning models have been a topic of research for a long time. There are three general approaches for generating training data. Firstly, there are synthetic simulation or rendering methods such as the one disclosed in WO2023111600A1. These methods usually require a model of the object (e.g., a CAD file) and a physical simulation model of the imaging system. They can generate versatile training data, but they are often not sufficiently realistic to train a machine learning model that generates highly accurate predictions. Secondly, there are methods that map a simulated image to a realistically looking image, thereby trying to close the gap between simulated and realistically looking images. Thirdly, there are augmentation methods that apply simple transformations such as translation, rotation or mirroring to given training data. However, the augmented training data is very limited in its variability. Fourthly, there are methods that use a machine learning model to generate training data from labeled images as, for example, disclosed in US 2023 109379 A1. The machine learning models used for this task comprise, for example, image-to-image translation models, conditional generative adversarial neural networks or controllable diffusion models. US 2023/0334834 A1, for example, discloses a text-to-image diffusion model that is used to generate a large training data set for a classification task. These methods are able to generate realistically looking training data. However, the amount of training data and the coverage of rare cases directly depends on the labeled input images and, thus, may still require considerable labeling effort.

Therefore, it is an objective of this invention to generate large amounts of versatile and balanced training data. It is another objective, to simplify the generation of training data and to reduce the labeling effort.

The objectives are achieved by the invention specified in the independent claims. Advantageous embodiments and further developments of the invention are specified in the dependent claims.

### Summary of the invention

Embodiments of the invention concern computer implemented methods, computer-readable media, computer program products, data carrier signals and data processing apparatuses for generating training data for training a machine learning model for feature identification.

A first embodiment involves a computer implemented method for generating training data for training a machine learning model, in particular for feature identification in an image, the method comprising: providing a generative machine learning model that uses feature annotations as conditioning input to generate a corresponding image, the generative machine learning model being trained using sample data comprising images and corresponding feature annotations; modifying feature annotations of the sample data; and generating training data using the modified feature annotations as conditioning input of the trained generative machine learning model, the training data being configured for training a machine learning model for feature identification.

The provided sample data is configured for training a machine learning model for feature identification. The method comprises a workflow that automatically extends and diversifies the amount of sample data. To this end, the provided sample data comprising images and corresponding feature annotations is used in two ways: firstly, for training a generative machine learning model that generates images from feature annotations and, thus, new training data, and secondly, as a basis for generating inputs of this trained generative machine learning model. To increase the amount of sample data, the feature annotations in the sample data are modified and used as input of the trained generative machine learning model. In this way, modified feature annotations and corresponding images are generated that are used as additional training data for training the machine learning model for feature identification. Preferably, the feature annotations are modified automatically, depending on the type of features to be identified. In this way, further training data can be generated quickly and with low user effort. By extending and diversifying the sample data, the accuracy of predictions of the machine learning model for feature identification is improved.

According to an example, the generative machine learning model uses one or more further conditioning inputs to guide the image generation process, e.g., text or image prompts. In this way, the training data generation process can be guided, for example specific categories of training data can be generated. One or more further conditioning inputs of the generative machine learning model may describe additional modifications of the feature annotations. In this way, modifications can be introduced in a particularly simple way.

In an example, at least some of the sample data is assigned to one or more categories, and the one or more categories are used to generate one or more conditioning inputs of the generative machine learning model. In this way, the generated training data can be guided for specific use cases.

The method may further comprise generating feature annotations that are underrepresented in the sample data and using the generated feature annotations as conditioning input of the trained generative machine learning model to generate training images. In this way, feature annotations occurring rarely or not at all in the sample data can be generated to reduce the problem of class-imbalance in the sample data.

According to an example, modifying feature annotations of the sample data comprises modifying one or more properties of the feature annotations from the group comprising feature location, feature shape, feature number. In this way, diverse feature annotations can be generated.

In an example, the modifications of the feature annotations are configured to generate at least some feature annotations that are underrepresented in the sample data. In this way, rare feature annotations can be generated in a targeted way.

In a preferred example, at least some of the feature annotations are modified automatically. In this way, the user effort and the computation time are strongly reduced and large amounts of training data can be generated easily.

At least some of the feature annotations may be modified using an auxiliary machine learning model, the auxiliary machine learning model being trained to map feature annotations to modified feature annotations. By using an auxiliary machine learning model for implementing modifications, even more diverse feature annotations can be generated, since the auxiliary machine learning model is able to combine diverse modifications.

According to an example, the generative machine learning model receives the sample image corresponding to the feature annotations before modification as further conditioning input, and the generative machine learning model is trained to inpaint the sample image only within a region comprising the modifications of the feature annotations to generate the training image. In this way, the complexity of the generative machine learning model is reduced yielding improved, e.g., more realistic, results. At the same time, the computation time for training and inference is reduced.

In an example, the method further comprises a quality review of the generated training data. In this way, the quality of the generated training data is controlled to ensure high quality training data.

In an example, the generated training data further comprises images and corresponding feature annotations of the sample data. Thus, the sample data is used in combination with the generated training data for training the machine learning model for feature identification. In this way, sufficiently large and versatile sample data can be obtained.

The generated training data may be configured for training a machine learning model for quality inspection. This is particularly interesting for quality control of manufactured objects such as batteries or objects comprising integrated circuit patterns where no CAD data exists or existing CAD data does not perfectly match the manufactured objects.

According to an embodiment of the invention, a method for training a machine learning model for feature identification in an image is trained using training data at least partially generated using a computer implemented method for generating training data according to any one of the embodiments, examples or aspects described above.

According to an embodiment of the invention, a method for feature identification in an image comprises: applying a machine learning model for feature identification to the image, the machine learning model being trained using training data at least partially generated using a computer implemented method for generating training data according to any one of the embodiments, examples or aspects described above.

According to an embodiment of the invention, a computer program comprises instructions which, when the program is executed by a computer, cause the computer to carry out a computer implemented method for generating training data of any one of the embodiments, examples or aspects described above.

The invention also refers to a computer-readable medium, on which a computer program executable by a computing device is stored, the computer program comprising code for executing a computer implemented method for generating training data of any one of the embodiments, examples or aspects described above.

The invention further comprises a data carrier signal carrying the computer program described before.

According to an embodiment of the invention, a data processing apparatus for generating training data for training a machine learning model for feature identification in an image comprises: one or more processing devices; one or more machine-readable hardware storage devices comprising instructions that are executable by one or more processing devices to perform operations comprising a computer implemented method for generating training data for training a machine learning model for feature identification according to any one of the embodiments, examples or aspects described above.

The data processing apparatus may further comprise a user interface that is configured for allowing a user to select and/or modify feature annotations of the sample data.

The invention described by examples and embodiments is not limited to the embodiments and examples but can be implemented by those skilled in the art by various combinations or modifications thereof.

### Brief Description of the Drawings

- Fig. 1: shows anode and cathode identifications in a battery scan;
- Fig. 2: shows detected defects in a battery scan;
- Fig. 3: shows biological sample identifications;
- Fig. 4: shows a defect identification in an image of a wafer;
- Fig. 5: shows a flowchart of a method for generating training data according to an embodiment of the invention;
- Fig. 6: shows a flowchart illustrating an example of the method for generating training data;
- Fig. 7: illustrates step S1 of the method for generating training data in Fig. 6;
- Fig. 8: illustrates step S2 of the method for generating training data in Fig. 6;
- Fig. 9: illustrates step S3 of the method for generating training data in Fig. 6;
- Fig. 10: illustrates step S4 of the method for generating training data in Fig. 6;
- Fig. 11: illustrates step S5 of the method for generating training data in Fig. 6;
- Fig. 12: illustrates step S6 and S7 of the method for generating training data in Fig. 6;
- Fig. 13: shows a data processing apparatus for generating training data according to an embodiment of the invention.

### Detailed Description

In the following, advantageous exemplary embodiments of the invention are described and schematically shown in the figures. Throughout the figures and the description, same reference numbers are used to describe same features or components. Dashed lines indicate optional features.

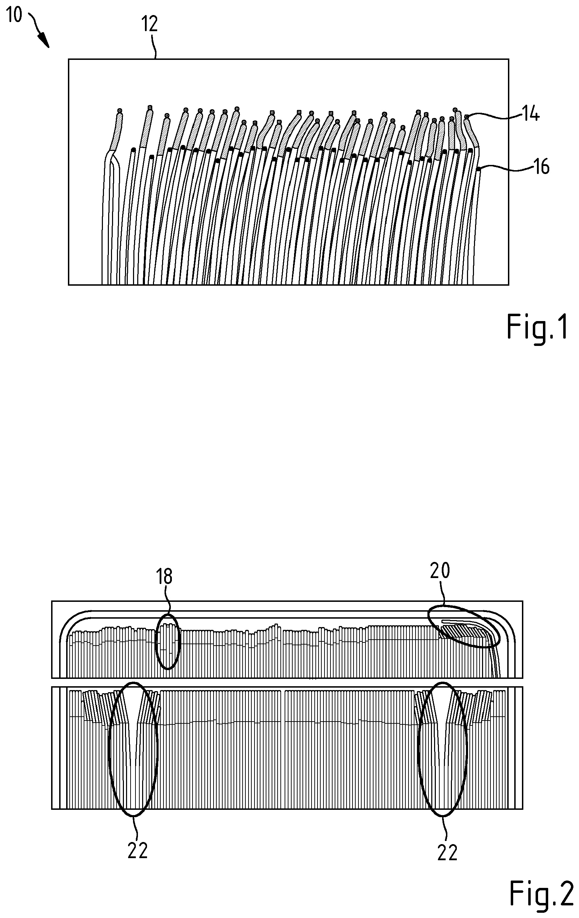

Fig. 1 shows an exemplary industrial application, namely the inspection of batteries using X-ray CT images 10. These images (or sections thereof) are used as input to a machine learning model. The machine learning model may identify features such as electrodes 14, 16 comprising anodes 14 and cathodes 16, from which defects can be subsequently derived by analyzing their position or shape (e.g., too long, too short or highly bent electrodes). Alternatively, as shown in Fig. 2, the machine learning model may directly identify features such as defects 18, 20, 22 in the electrodes 14, 16. Defects may, for example, include too long cathodes 18 causing no or negative overhang, too long and/or bent electrodes 20 or electrode gaps 22, where the distance between neighboring electrodes is too large. If such defective cases are very rare or do not occur at all in the sample data, the machine learning model will not be able to reliably identify defects in batteries.

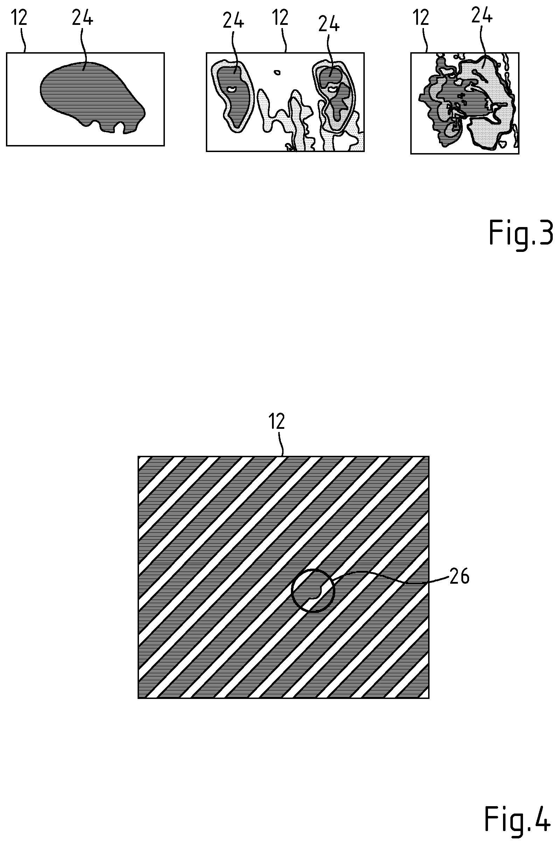

Fig. 3 shows another exemplary application, namely a medical application that requires locating the exact area of a feature in the form of a biological sample 24 in a microscopy image 12. To train a machine learning model that reliably identifies the biological sample 24, the sample data must contain samples of various sizes and shapes imaged with different microscopes and acquisition parameters. In case there might be too few cases of very small samples imaged at a low brightness level, the machine learning model will likely fail to identify these biological samples.

Fig. 4 shows another exemplary application, namely the inspection of objects comprising integrated circuit patterns, such as photolithography masks or wafers, from images 12, for example aerial images. Various types of structure patterns occur in these objects that may contain features in the form of various types of defects 24, some of them being rare. In addition, different optical systems with different imaging parameters can be used to image these objects. If the sample data does not include a sufficient number of examples of structure patterns and rare defects 24 for different optical systems and parameters, the machine learning model will not be able to accurately identify defects 24 in the image 12.

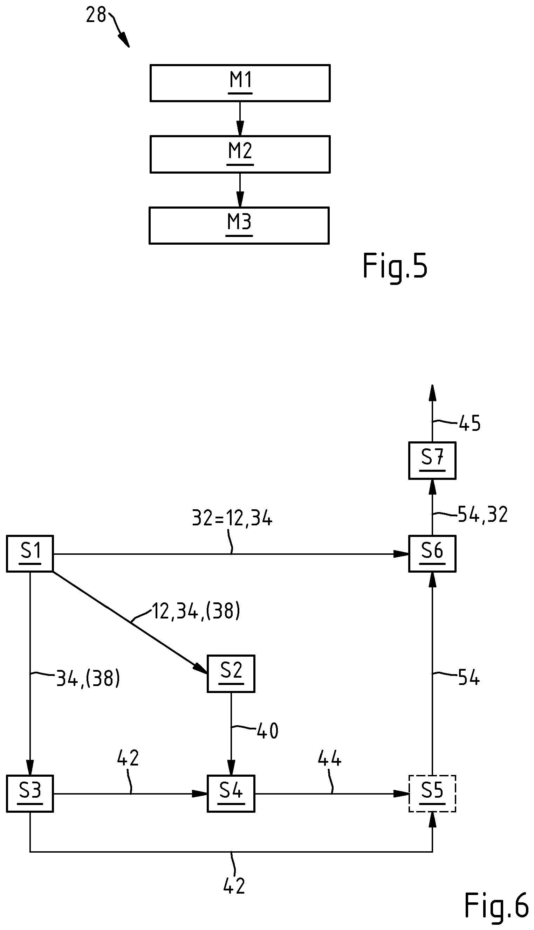

To alleviate the problem of sufficient and balanced training data generation, a computer implemented method 28 for generating training data for training a machine learning model, in particular for feature identification in an image, e.g., in an image of an object, according to a first embodiment, as illustrated in Fig. 5, comprises: providing a generative machine learning model that uses feature annotations as conditioning input to generate a corresponding image, the generative machine learning model being trained using sample data comprising images and corresponding feature annotations in a step M1; modifying feature annotations of the sample data in a step M2; and generating training data using the modified feature annotations as conditioning input of the trained generative machine learning model, the training data being configured for training a machine learning model for feature identification in a step M3. In particular, step M3 comprises generating training images using the trained generative machine learning model, wherein the modified feature annotations of the sample data are used as conditioning input of the trained generative machine learning model, and generating training data from the generated training images and the modified feature annotations, the training data being configured for training a machine learning model for feature identification.

By using the same sample data for training the generative machine learning model to generate further training data, and at the same time as a basis for obtaining modified feature annotations as input of the trained generative machine learning model, a workflow is provided that generates training data of an improved quality in a simplified manner. Furthermore, less annotations are required to generate a sufficient amount of versatile training data. Thus, the user effort and the required computation time are reduced.

Training data comprises images with corresponding feature annotations. Sample data is used as a synonym for training data throughout this disclosure.

The term "feature" in an image refers to any measurable property or characteristic that provides information about the visual content. This can range from low-level attributes such as pixel intensity, color or edges to more complex patterns such as textures, shapes, or specific keypoints, to complex features comprising objects or patterns in an image. A feature may, for example, refer to edges, e.g., edges delimiting a specific object or pattern such as a specific biological sample or cell type, etc. A feature may refer to a defect, an electrode, a biological sample, an integrated circuit pattern, a landscape, a traffic sign, a human, a face, etc. An image can contain one or more features of the same or of different types.

A feature annotation in an image refers to any type of labeling of the image. A labeling may comprise a segmentation of the image, i.e., a pixel-wise labeling of one or more features in the image. A labeling may comprise bounding boxes, i.e., regions encompassing one or more features in the image. A labeling may comprise image-level labels, i.e., labels indicating the presence or absence of a feature anywhere in the whole image. A labeling may also comprise natural text describing the content of the image. Further labelings are conceivable. The labeling may be generated by a human annotator or automatically by some kind of labeling method, e.g., an image segmentation method. A feature annotation may be modified in various ways, e.g., by modifying the location, the size, the shape or the type of label itself of the feature annotation.

The term "feature identification" may refer to feature detection, feature segmentation, feature localization or feature classification. Thus, the machine learning model for feature identification can be used in various ways.

An image, sample image or training image can refer to various kinds of images, e.g., a two-dimensional image, a three-dimensional image, a video, a time-lapse series, a stack of images or a volumetric three-dimensional image that can, for example, be processed slice by slice. An image can be acquired using an inspection system, or it can be simulated, e.g., from a model of an object. Images can be of various modalities, e.g., structured electron microscopy (SEM) images, aerial images, optical images, x-ray images, computer tomography (CT) images, depth sensor images, point clouds, meshes or focused-ion-beam (FIB) images, atomic force microscopy (AFM) images, ultrasound images or multimodal images, e.g., acquired using a combination of x-ray imaging and SEM. An image of an object can image the complete object or one or more subsections thereof.

In order to quickly process large amounts of data, machine learning methods can be used. Machine learning is a field of artificial intelligence. Machine learning methods generally build a parametric machine learning model based on training data consisting of a large number of samples. During training, the parameters of the machine learning model are optimized by minimizing an application-specific objective function (loss function). After training, the model is able to generalize the knowledge gained from the training data to new previously unencountered samples, thereby making predictions for new data. There are many machine learning methods, e.g., linear regression, k-means, support vector machines, decision trees, random forests or deep learning approaches. Machine learning models are parametric models whose parameters are optimized during training. The machine learning model and the learned parameters can be applied to make predictions for new input data. Machine learning models comprise, for example, neural networks, diffusion models, transformers, support vector machines, decision trees, random forests, subspaces, cluster sets, etc.

Deep learning is a class of machine learning that uses artificial neural networks with usually numerous (at least three) hidden layers between the input layer and the output layer. Due to this complex internal structure the networks are able to progressively extract higher-level features from the raw input data. Each level learns to transform its input data into a slightly more abstract and composite representation, thus deriving low and high level knowledge from the training data. The hidden layers can have differing sizes and tasks such as convolutional or pooling layers.

Machine learning models are trained using training data, i.e., examples, and, thus, independently derive their knowledge from the training data instead of requiring a user to define rules to obtain the desired results. In this way, optimal results with respect to the minimized loss function can be obtained automatically in a data-driven way. Thus, the use of machine learning methods increases the recall and precision of the method and reduces the required user effort.

A generative machine learning model learns the underlying probability distribution of a training dataset, enabling it to generate new, similar data samples. Instead of simply mapping inputs to outputs as discriminative models do, generative models capture the joint probability distribution of the observed data, which allows them to synthesize new examples that resemble the training data. Examples of generative models include generative Adversarial Networks (GANs) that consist of two competing networks-a generator that produces new data samples and a discriminator that evaluates their authenticity, Variational Autoencoders (VAEs) that encode data into a latent space and then decode from that space to generate new samples, autoregressive models such as PixelRNN or PixelCNN, which generate data one element at a time by modeling the conditional distribution of each element given previous ones, diffusion models that work by learning to reverse a diffusion process-where data is gradually corrupted with noise-and then reconstruct the original data from this noisy version, and Transformers that capture complex relationships between elements of input data using self-attention mechanisms, e.g., between different parts of an integrated circuit pattern.

Generative machine learning models may be conditioned on input conditions to guide the data sample generation process. In this way, data samples from the underlying probability distribution conditioned on the conditioning inputs are generated. As conditioning input of the generative machine learning model, a model of an object, an edge map, a labeled image, a representative image or a text can, for example, be used.

A generative machine learning model may be trained from scratch using sample data, meaning that building and training the model starts from randomly initialized weights rather than using pre-trained weights or models. Preferably, the generative machine learning model is trained based on a pre-trained model that is fine-tuned using the sample data. In this way, training time and the amount of required training data are strongly reduced.

Fig. 6 illustrates a data flowchart 30 of the computer implemented method for generating training data 54 according to an embodiment of the invention. In a step S1, sample data 32 comprising images 12 and corresponding feature annotations 34 is provided. It is used in two ways: firstly, it is used in a step S2 for training (or fine-tuning) a generative machine learning model 40 that is conditioned on feature annotations 34 to generate a corresponding image 12. Secondly, the feature annotations 34 are used in a step S3 to generate modified feature annotations 42. The modified feature annotations 42 are used as conditioning input of the trained generative machine learning model 40 to generate training images 44 in a step S4. The generated training images 44 and modified feature annotations 42 are, optionally, reviewd in a step S5 for compliance with a specification. Upon acceptance, the training images 44 and the modified feature annotations 42 form training data 54. The training data 54 is added to the sample data 32 in a step S6. The sample data 32 together with the generated training data 54 is configured for training a machine learning model for feature identification 45 in a step S7. By using this workflow, the provided sample data 32 is supplemented by the generated training data 54 to obtain a sufficiently large and versatile dataset that also contains rare samples. Each of the steps is described in detail in the following.

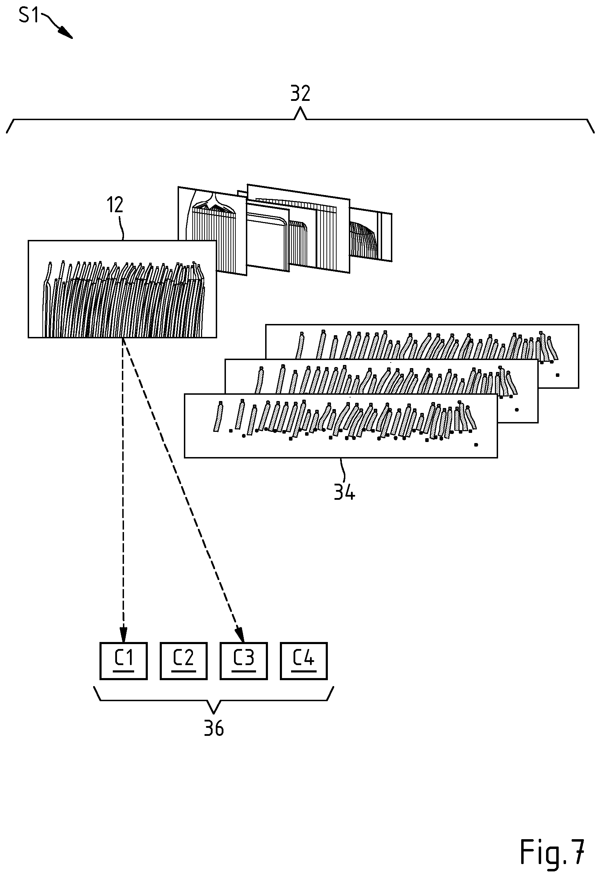

In step S1 illustrated in Fig. 7, a collection of sample data 32 comprising images 12 and corresponding feature annotations 34 is provided. The sample data 32 may also comprise categories 36, here C1,..,C4, that are represented by a characteristic text, a class or a representative image. The images 12 and corresponding feature annotations 34 may be assigned to these categories 36. Categories 36 comprise, for example, an object type, an image type, a machine type, image acquisition parameters or settings, a vendor, etc.

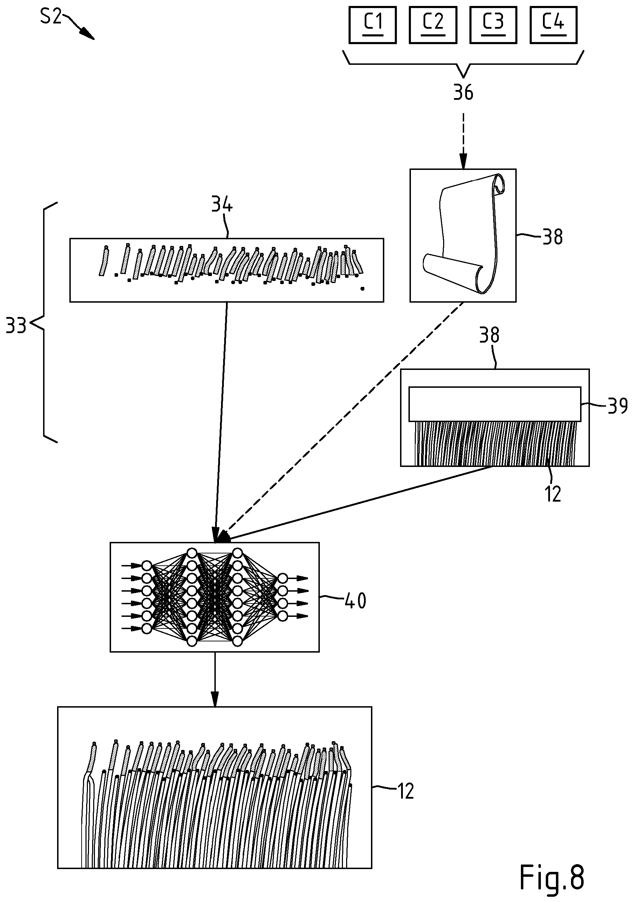

In step S2 illustrated in Fig. 8, a generative machine learning model 40 is trained using the provided sample data comprising images 12 and corresponding feature annotations 34. Preferably, a pre-trained machine learning model is used, that is only fine-tuned using the provided sample data 32. The machine learning model 40 uses the feature annotations 34 as conditioning input 33 to guide the image generation process to generate images 12.

Optionally, one or more further conditioning inputs 38 may be used to guide the generation of training images. The further conditioning inputs 38 may describe target properties of the image that is generated by the generative machine learning model 40. The further conditioning inputs 38 may be generated from the categories 36 the images 12 and corresponding feature annotations 34 have been assigned to in step S1. From the categories, text and/or image prompts may be generated and used as one or more conditioning inputs 38. An exemplary text prompt may comprise "Battery scan of type X using machine Y of vendor Z" or "Image of biological simple X of brightness level Y" or "Aerial image of photomask acquired using inspection system X with at a defocus Y". A representative image may, for example, comprise a typical pattern in an object comprising integrated circuit patterns, e.g., lines and spaces, or microscopic images of electronic parts, etc. From the representative image, an image prompt can be generated. The further conditioning inputs 38 can depend on the categories 36 but they do not have to. A text prompt independent of the categories could, for example, say "Add noise of variance X to the generated image". The conditioning inputs 33 of the generative machine learning model 40 comprise the feature annotations 34 and, optionally, the further conditioning inputs 38.

One or more further conditioning inputs 38 of the generative machine learning model 40 may describe additional modifications of the feature annotations. In this way, feature annotations are not only modified explicitly (as described in step S3) but they are additionally modified by the one or more further conditioning inputs 38 of the generative machine learning model 40. For example, a text prompt may define additional modifications of the feature annotations, for example "randomly move annotations of features X in horizontal direction by at most Y pixels". In this way, feature annotations can be modified in a particularly flexible and simple way. One or more further conditioning inputs 38 of the generative machine learning model 40 may describe new feature annotations that are added to the existing or modified feature annotations. For example, a text prompt may indicate "add two electrodes with an overhang of X at the right side of the electrodes in the battery scan". In addition to modified feature annotations, new feature annotations may be generated and used as input of the generative machine learning model.

The further conditioning inputs 38 are not mandatory, but they offer additional options to guide the image generation process, for example, to limit the image generation process to images of specific categories described above, e.g., to images of a specific object, machine, vendor, defocus or brightness level. In this way, more versatile training data and training data that specifically covers rare features can be generated.

Various generative machine learning models 40 can be used, for example conditional generative adversarial neural networks, conditional diffusion models, conditional Variational Autoencoders, Transformers, etc.

A conditional diffusion model is a type of generative machine learning model that produces data samples by gradually denoising random noise, while incorporating additional conditioning inputs (such as class labels, text prompts, or other auxiliary data). In these models, the diffusion process is modified so that every step of the reverse denoising process is guided by the condition, ensuring that the final generated sample adheres to the desired characteristics of the joint probability distribution conditioned on the conditioning input.

A conditional generative adversarial neural network (cGAN) is a type of generative adversarial network where both the generator and the discriminator are provided with one or more conditioning inputs (such as class labels, textual descriptions, or other auxiliary data). The one or more conditioning inputs guide the generator to produce samples that not only look realistic but also match the specified condition, while the discriminator evaluates whether the generated samples are both authentic and consistent with the given condition.

A conditional variational autoencoder (CVAE) is an extension of the standard variational autoencoder that incorporates additional one or more conditioning inputs - such as class labels, text, or other data-into both the encoder and decoder networks. This extra input guides the model to learn a latent space organized by the condition, allowing it to generate or reconstruct data samples that align with specific attributes. The CVAE is trained by optimizing a modified evidence lower bound (ELBO) that balances the reconstruction quality and a regularization term (typically the Kullback-Leibler divergence) for the conditional latent variables.

In particular, the following generative machine learning models may be used: cGANs as described in "High-Resolution Image Synthesis and Semantic Manipulation with Conditional GANs, Ting-Chun Wang, Ming-Yu Liu, Jun-Yan Zhu, Andrew Tao, Jan Kautz, Bryan Catanzaro, International Conference on Computer Vision and Pattern Recognition, 2017", ControlNet using Stable Diffusion as described in "Adding conditional control to text-to-image diffusion models", Lvmin Zhang, Anyi Rao, Maneesh Agrawala, International Conference on Computer Vision and Pattern Recognition 2023, or prompt-free diffusion models as described in "Prompt-Free Diffusion: Taking "Text" out of Text-to-Image Diffusion Models", Xingqian Xu, Jiayi Guo, Zhangyang Wang, Gao Huang, Irfan Essa, Humphrey Shi, International Conference on Computer Vision and Pattern Recognition, 2024".

In an example also illustrated in Fig. 8, the generative machine learning model 40 receives the sample image 12 corresponding to the feature annotations 34 before modification as further conditioning input 38, and the generative machine learning model 40 is trained to inpaint the sample image 12 only within a region 39 comprising the modifications of the feature annotations 42 to generate the training image 44. The region 39 may be generated using a bounding box encompassing the modified feature annotations 42. It may be used as further conditioning input 38 of the generative machine learning model 40. The image 12 may be set to zero within the region 39 before inpainting. The machine learning model for inpainting may be trained using corresponding training data comprising images 12 with regions 39 that are set to zero, e.g., randomly selected regions 39, as well as the regions 39 and corresponding feature annotations 34 of the images 12 as conditioning input and the original images 12 as output. As only the region 39 is inpainted instead of generating the complete image, the complexity of the generative machine learning model is reduced. This may lead to more realistic generated training images. At the same time, the computation time for training and inference is reduced.

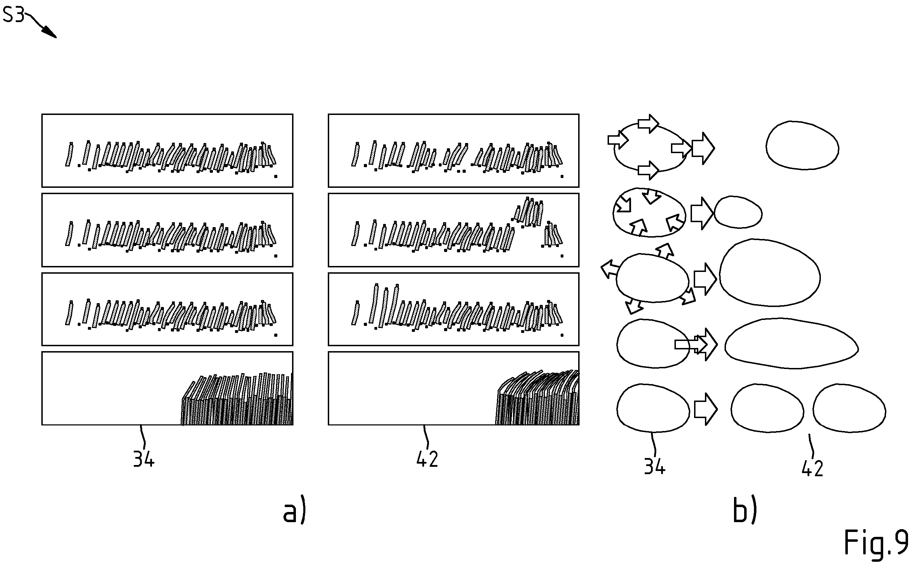

In step S3 illustrated in Fig. 9a, b, feature annotations 34 of the sample data 32 are modified. The modifications may modify one or more properties of the feature annotations 34 from the group comprising feature location, feature shape, feature number. The modifications may comprise one or more from the group comprising feature displacement, feature deformation, feature mirroring, adding, removing or duplicating.

For example, electrode annotations 34 in Fig. 9a are modified by removing or adding electrodes (first image), by moving electrodes to another location (second image) or by changing the shape of electrodes (third and fourth image), e.g., by extending, shortening, mirroring or bending it.

Biological samples may be modified as illustrated in Fig. 9b, for example, by moving a sample (first image) to another location, by shrinking a sample (second image), by expanding a sample (third image), by deforming a sample (fourth image), e.g., by modifying its contour or area or by mirroring a sample, or by removing, adding or duplicating a sample (fifth image).

Objects comprising integrated circuit patterns may, for example, be modified by moving structures to another location, by deforming structures, e.g., by introducing edge roughness or rounded line endings, by removing or adding structures, by mirroring or duplicating structures, or by combining patterns of structures.

Two or more of these modifications may be applied to the same sample. Other modifications are, of course, possible as well.

Modifications of feature annotations may be carried out by a user, in particular the modifications described above. A user interface may be provided that allows the user to browse through feature annotations in the sample data, select an appropriate example and edit the feature annotations. A user may, for example, hand-draw a feature annotation or a modifications to a feature annotation. Alternatively, a user may apply manipulations to feature annotations via a user interface. These manipulations may be implemented in a user interface and can be selected by a user. The user may indicate parameters such as a factor for shrinking or expanding a feature annotation, or for marking regions where all feature annotations will be deleted or moved to a different location, etc.

Modifications of feature annotations may be carried out automatically, in particular the modifications described above. Preferably, at least some of the feature annotations, more preferably the majority of feature annotations, even more preferably more than 90% of the feature annotations, are modified automatically. In this way, a large amount of versatile training data can be generated at low computation times, and the user effort is strongly reduced.

The modifications may be implemented using methods that automatically modify one or more properties of the feature annotations, e.g., properties from the group comprising feature location, feature shape, feature number. To this end, the method may implement modifications comprising one or more from the group comprising feature displacement, feature deformation, feature mirroring, adding, removing or duplicating.

Feature annotations may be also modified automatically using a simulation. To this end, for example, feature annotations may be removed and replaced by simulated feature annotations, or feature annotations may be added to existing feature annotations. A simulation of a modification of feature annotations may be based on physical knowledge or statistical knowledge about features in an image. For example, for simulating a battery scan image, annotations of anodes and cathodes in form of lines of different lengths may be generated close to each other. The length differences may follow a statistic for such batteries. Bent electrode annotations may be simulated using Splines, etc. Biological sample modifications may be simulated using regions of specific shapes following statistics, e.g., size statistics or statistics over shape descriptors. Objects comprising integrated circuit patterns may be simulated using typical patterns or pattern combinations, such patterns comprising lines and spaces or contact holes. Instead of simulating modified feature annotations, new feature annotations can be generated using a simulation as well.

To modify feature annotations automatically, at least some of the feature annotations may be modified using an auxiliary machine learning model, the auxiliary machine learning model being trained to map feature annotations to modified feature annotations. The auxiliary machine learning model may be trained using training data comprising feature annotations as input and modified feature annotations as output. The training data may be generated by a user or a simulation as described above. As auxiliary machine learning model, an image-to-image neural network may be used, e.g., a U-Net or a CNN. By using an auxiliary machine learning model for modifying feature annotations, the modifications can be carried out quickly and automatically. In addition, the auxiliary machine learning model will be able to apply multiple modifications at the same time and, thus, generate even more versatile feature annotations than a user or simple modification routines.

Feature annotations may also be modified automatically by warping a feature annotation using some kind of displacement field or displacement vectors. The displacement field or displacement vectors may indicate desired displacements of feature annotations or pixels in an image describing feature annotations. The displacement field or displacement vectors may be generated randomly, or randomly within predefined ranges, or they may be drawn from a statistic, or they may be indicated by a user. They may depend on classes the feature annotations represent. For example, anodes may be moved in a way different from cathodes in a battery scan image. In this way, various displacements of feature annotations can be generated easily and require low user effort.

Feature annotations may also be modified automatically using inpainting methods. To this end, a region may be indicated in the feature annotations, e.g., randomly or systematically (or by a user), and the feature annotations within this region may be removed and subsequently inpainted. Inpainting methods can, for example, use machine learning models that are trained to replace missing parts of an image using patterns copied or generated from other parts of the same image, here from the remaining feature annotations. This is particularly useful in case of regular patterns of feature annotations as, for example, in battery scan images or in images of objects comprising integrated circuit patterns. Alternatively, the machine learning model for inpainting may be trained to reconstruct feature annotations using training data comprising complete feature annotations.

Feature annotations may also be modified almost automatically requiring very little user interaction using the concept of DragDiffusion as described in "DragDiffusion: Harnessing Diffusion Models for Interactive Point-based Image Editing, Yujun Shi, Chuhui Xue, Jun Hao Liew, Jiachun Pan, Hanshu Yan, Wenqing Zhang, Vincent Y. F. Tan, Song Bai, Conference on Computer Vision and Pattern Recognition, 2023".

At least some of the modified feature annotations are underrepresented in the sample data, meaning that these feature annotations occur rarely or not at all in the sample data. To this end, the modifications of the feature annotations may be configured to generate at least some feature annotations that are underrepresented in the sample data. Underrepresented feature annotations that occur rarely or not at all may be known beforehand, e.g., from experience or from a statistic over features generated from other data.

Underrepresented feature annotations may be identified by a user, e.g., using his experience or by browsing through the data.

Underrepresented feature annotations may be identified using the categories the sample data is assigned to. For example, a statistic over categories of the sample data could be computed, e.g., using relative frequencies. Categories occurring rarely or not at all in the statistic, or categories with less than a specified number of samples can then be identified. In this way, rarely occurring or missing defect types, or rarely occurring machine types or machine parameters can be identified.

Underrepresented feature annotations may also be identified using statistical models. To this end, a distribution may be fitted to the sample data, for example using a parametric or non-parametric density estimation method. Optionally, the sample data may be mapped to a feature space before fitting the distribution, to preserve the most important features while reducing the dimensionality and complexity of the distribution. For example, a multivariate Gaussian distribution may be fitted using the expectation maximization algorithm, or a support vector machine may be trained, or a Parzen density estimator may be used to estimate a non-parametric density. For a given input image, e.g., an image from the sample data, the statistical model may be used to estimate its likelihood from the estimated density. The estimated density may also be used to generate new samples that occur rarely or not at all in the sample data, e.g., by drawing samples from regions with low density and, optionally, mapping them from the feature space to the original sample space.

The feature space could be generated using a trained machine learning model, e.g., an encoder. An encoder may be trained by training an autoencoder from the sample data and using only the encoder part of the autoencoder to map sample data to a feature space with lower dimensionality. Alternatively, subspace methods such as principal component analysis may be used.

Underrepresented feature annotations may also be identified using a machine learning model. The machine learning model may map an image comprising one or more features to a value indicating an expected likelihood of the one or more features. The machine learning model may, for example, comprise an image-to-image neural network such as an autoencoder or U-Net that reconstructs an input feature annotation. Larger reconstruction errors may indicate rare feature annotations that cannot be reconstructed correctly by the machine learning model due to its underrepresentation in the training data, whereas small reconstruction errors indicate rather common feature annotations that are not rare. Thus, the reconstruction error could be used to identify feature annotations that occur rarely or not at all in the sample data. The machine learning model may be trained on the feature annotations of the sample data directly or on feature annotations of another dataset. Alternatively, machine learning models for regression may be used, such as support vector machines, k-means, random forests, decision trees, multilayer perceptrons or deep learning models such as convolutional neural networks, etc.

Instead of identifying underrepresented feature annotations in the sample data, a different dataset may be used to define underrepresented feature annotations. The different dataset may be a different collection of sample data annotations, or a subset of the sample data, e.g., sample data assigned to specific categories, or it may comprise the sample data and further data as well, etc.

After identifying underrepresented feature annotations in the sample data, these feature annotations may be generated in a targeted manner to obtain a balanced sample dataset. In case a feature annotation in the sample data is identified that occurs rarely, this feature annotation may be modified multiple times as described above. In case a feature annotation in the sample data is identified that does not occur at all in the sample data, this feature annotation may be generated and, optionally, modified multiple times as described above. Feature annotations that occur not at all in the sample data could, for example, be identified by estimating a density and drawing samples in regions of low density as described above, or by a user from his experience.

In an example, the generated training data further comprises generating feature annotations that are underrepresented in the sample data, e.g., in categories missing in the sample data. These generated feature annotations are used as conditioning input of the generative machine learning model to generate further training images. The further training images and the newly generated feature annotations are added to the generated training data. Underrepresented generated feature annotations may, for example, be generated by drawing from tails of a distribution over feature annotations estimated from the sample data, in particular in a feature space the feature annotations are mapped to, as described above. Underrepresented feature annotations may also be generated using a simulation as described above.

The generated modified or underrepresented feature annotations may also be assigned to one or more of the categories established in step S1. The one or more categories of a modified or new feature annotation can, for example, be assigned by a user, or they can be derived from the feature annotation used to generate the modified feature annotation, or they can depend on the modification applied to the feature annotation.

By identifying underrepresented feature annotations and generating feature annotations for these cases in a targeted way, the typical problem of class-imbalance in the training data is alleviated. Thus, the prediction accuracy of the trained machine learning model for feature identification is improved.

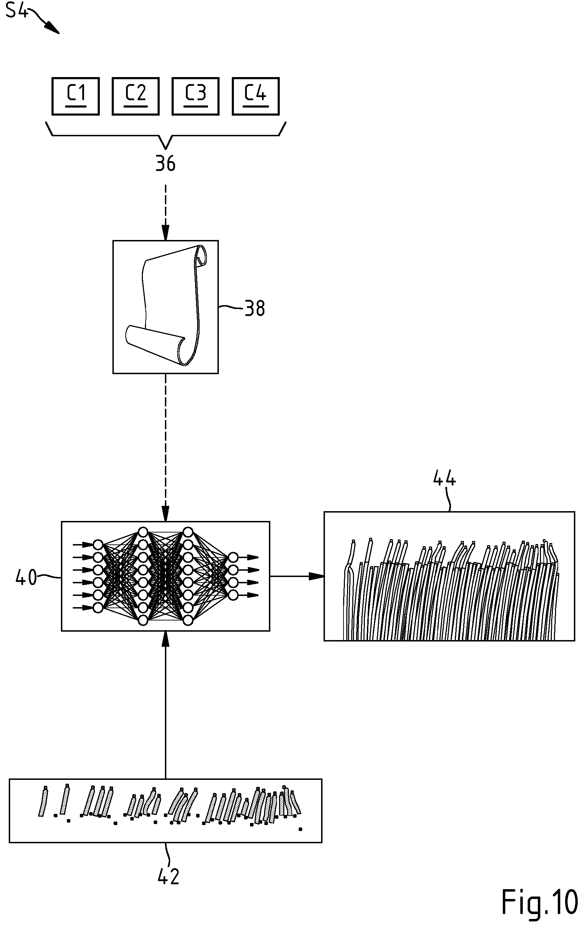

In step S4 illustrated in Fig. 10, the trained (or fine-tuned) generative machine learning model 40 is conditioned on the modified feature annotations 42 and, optionally, on further conditioning inputs 38 such as a text or image prompt as described above to generate new training images 44. The further conditioning inputs 38 may be identical to those used during training, but they can also be different. They may be generated from the available categories 36 established from the sample data 32 in step S1.

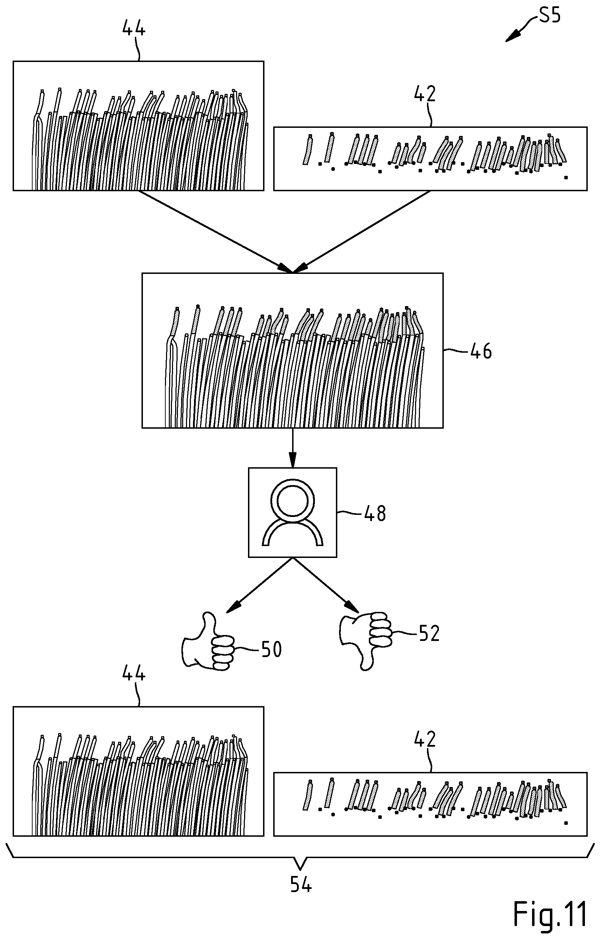

In step S5 illustrated in Fig. 11, the quality of the training data 54 comprising the generated training images 44 and the corresponding modified feature annotations 42 is reviewed. The review can be carried out with respect to a specification of the generated image and/or with respect to its correspondence to the modified feature annotations. To this end, an overlay 46 of the generated training image 44 and the corresponding modified feature annotations 42 may be generated. The overlay 46 may be configured for review by a user 48, e.g., via a user interface. To this end, the method may further comprise presenting the generated training images 44 and corresponding modified feature annotations 42 and receiving quality information via a user interface. The generated training images 44 and corresponding modified feature annotations 42 may be rejected 52 or accepted 50. Upon accepting the generated training image 44 and corresponding modified feature annotations 42, these are added to the training data 54.

In an example, quality information about the generated training images 44 and corresponding modified feature annotations 42 can be used as conditional input of the generative machine learning model. In this way, the generative machine learning model may learn to correct modified feature annotations 42 of low quality to improve their quality.

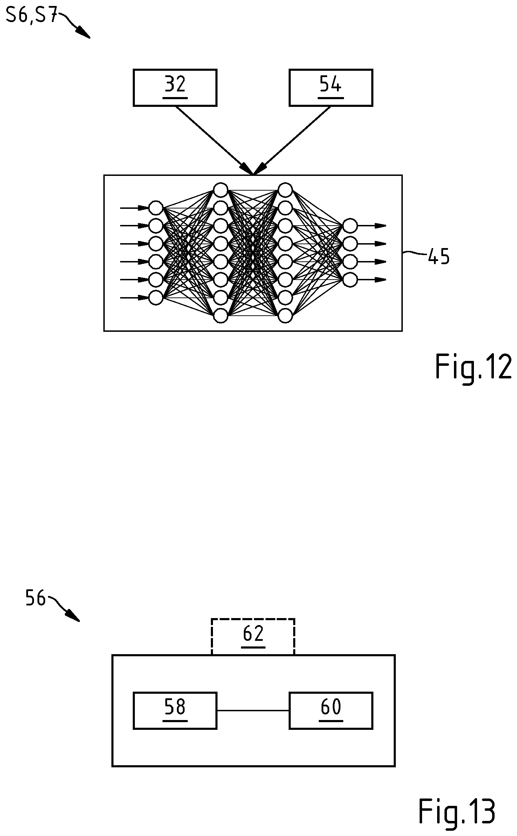

The generated training data 54 is then added to the sample data 32 in step S6 illustrated in Fig. 12. In this way, the sample data 32 is extended by the generated training data 54. All of the sample data 32 may be joined with all of the training data 54, or only portions of the sample data 32 and the training data 54, e.g., data belonging to specific categories. In this way, a sufficiently large and versatile training dataset is generated. The generated training data 54 can then be used to train a machine learning model for feature identification 45 in step S7 as illustrated in Fig. 12. The trained machine learning model for feature identification can then be used to identify features. Due to the high-quality training dataset (e.g., versatile and balanced dataset), the prediction accuracy of the machine learning model is high.

A method for training a machine learning model for feature identification in an image according to an embodiment of the invention uses training data at least partially generated using a computer implemented method for generating training data as described above.

The generated training data 54 is configured for training a machine learning model for feature identification. To train a machine learning model for feature identification, the generated training data 54 may be combined with the sample data 32 to obtain a large training dataset comprising images and corresponding feature annotations. Portions of this training dataset may be selected for training the machine learning model for feature identification, or the complete training dataset may be used. Further training data may also be used during the training, e.g., training data generated using a different method. During training, the machine learning model for feature identification is trained to map an image to a corresponding feature annotation. As machine learning model, a typical model for object identification can be used, e.g., an image-to-image neural network such as a U-Net or a CNN, Fast R-CNN or YOLO (You only look once).

A method for feature identification in an image according to an embodiment of the invention comprises: applying a machine learning model for feature identification to the image, the machine learning model being trained using training data at least partially generated using a computer implemented method for generating training data as described above.

After identifying features in an image, measurements may be taken of the identified features, e.g., their size, number, intensity or color, location, frequency, etc. In addition, the features may be classified, e.g., by using a trained machine learning model. Furthermore, statistical methods may be applied, e.g., by computing the number of features per area, their average size, their distribution, etc. In this way, statements about the imaged object can be made, e.g., on its quality, on its state, on the presence or absence of a specific condition, etc.

In particular, the generated training data 54 may be configured for training a machine learning model for quality inspection, in particular quality inspection of an object. The trained machine learning model may then be used for quality inspection of images. Quality inspection of an object may be particularly interesting for inspecting manufactured objects such as batteries or objects comprising integrated circuit patterns.

Quality inspection refers to the process of determining quality parameters of an object from an image of the object. Quality inspection may comprise identifying defects in an image. Defect identification aims at locating features in the form of defects in the image of the object and deriving quality information from their characteristics, e.g., their location, their size, their type, their shape, their total number, their number per area, or from statistical measurements of the defects such as an average size, an intensity distribution, etc.

As illustrated and described with respect to Fig. 2 for the case of battery inspection, the machine learning model for defect identification maps the image of the object to defect indicators, e.g., an image with a defect likelihood, a segmentation of the image or bounding boxes. The machine learning model for defect identification may perform various tasks such as defect detection (presence or absence of a defect), defect localization (locating a defect), defect segmentation (computing the aera, volume or outline of a defect), defect classification (assigning a defect class to a defect), etc.

Measurements may be taken of the identified defects. In addition, the defects may be classified, e.g., by using a trained machine learning model. In this way, quality statements can be made about the object, e.g., about the number of defects per area, the total number of defects, the type of defects, the severity of defects, measurements of defects, etc. Depending on properties of the defects (e.g., their size, location, type, relevance, etc.) a defect can be reduced, repaired or ignored, or the whole object can be discarded.

Quality inspection may also comprise identifying features in an image, taking measurements of these features and comparing these measurements to some kind of specification to derive quality information about the object. In case of a battery image, anodes and cathodes can be identified and an overhang in form of a length difference between an anode and a neighboring cathode can be measured. Depending on the length difference quality information can be generated. For example, a threshold can be specified and overhangs above this threshold may indicate a potential defect in the battery. In another example, a specific size or shape of a cell or tissue may be measured and quality information may be derived from the measurements. In another example, properties such as structure distances can be measured of integrated circuit patterns and compared to a specified critical dimension (smallest feature size that can be accurately printed on a semiconductor wafer) to derive quality information, e.g., potential defects.

According to an embodiment of the invention illustrated in Fig. 13, a data processing apparatus 56 for generating training data for training a machine learning model for feature identification comprises: one or more processing devices 58; one or more machine-readable hardware storage devices 60 comprising instructions that are executable by one or more processing devices 58 to perform operations comprising a computer implemented method 28 for generating training data for training a machine learning model according to any one of the embodiments, examples or aspects described above.

The data processing apparatus 56 includes one or more processing devices 58, e.g., implemented as a CPU, GPU or TPU. The one or more processing devices 58 can load program code from a hardware-storage device 60, e.g., program code for executing a computer implemented method 28 for generating training data for training a machine learning model as described above. The one or more processing devices 58 can execute the program code. The data processing apparatus 56 optionally comprises a database for loading and/or saving data, e.g., categories, machine learning model parameters, pre-trained machine learning models, pre-defined texts describing modifications of mask models, etc. The data processing apparatus 56 may comprise a user interface 62. The user interface may comprise a prompt for entering further conditioning inputs, e.g., a text prompt for entering descriptions of the desired training data. The user interface may be configured for allowing a user to select and/or modify feature annotations of sample data. The user interface may be configured to receive control parameters for training a machine learning model. The user interface may comprise a display for monitoring the progress of the training data generation or of the training of a machine learning model.

Reference throughout this specification to "an embodiment" or "an example" or "an aspect" means that a particular feature, structure or characteristic described in connection with the embodiment, example or aspect is included in at least one embodiment, example or aspect. Thus, appearances of the phrases "according to an embodiment", "according to an example" or "according to an aspect" in various places throughout this specification are not necessarily all referring to the same embodiment, example or aspect, but may. Furthermore, the particular features or characteristics may be combined in any suitable manner, as would be apparent to one of ordinary skill in the art from this disclosure, in one or more embodiments.

Furthermore, while some embodiments, examples or aspects described herein include some but not other features included in other embodiments, examples or aspects combinations of features of different embodiments, examples or aspects are meant to be within the scope of the claims, and form different embodiments, as would be understood by those skilled in the art.

Embodiments, examples and aspects of the invention may be described by the following clauses:
1. A computer implemented method 28 for generating training data 54 for training a machine learning model 45, in particular for feature identification in an image, the method comprising:
   - Providing a generative machine learning model 40 that uses feature annotations 34 as conditioning input 33 to generate a corresponding image 12, the generative machine learning model 40 being trained using sample data 32 comprising images 12 and corresponding feature annotations 34;
   - Modifying feature annotations 34 of the sample data 32;
   - Generating training images 44 using the trained generative machine learning model 40, wherein the modified feature annotations 42 of the sample data 32 are used as conditioning input 33 of the trained generative machine learning model 40, and generating training data 54 from the generated training images 44 and the modified feature annotations 42, the training data 54 being configured for training a machine learning model 45 for feature identification.
2. The method of clause 1, wherein the generative machine learning model 40 uses one or more further conditioning inputs 38 to guide the image generation process.
3. The method of clause 2, wherein one or more further conditioning inputs 38 of the generative machine learning model 40 describe additional modifications of the feature annotations 34.
4. The method of clause 2 or 3, wherein at least some of the sample data 32 is assigned to one or more categories 36, and wherein the one or more categories 36 are used to generate one or more conditioning inputs 33 of the generative machine learning model 40.
5. The method of any one of the preceding clauses, further comprising generating feature annotations 42 that are underrepresented in the sample data 32 and using the generated feature annotations 42 as conditioning input 33 of the trained generative machine learning model 40 to generate training images 44.
6. The method of any one of the preceding clauses, wherein modifying feature annotations 34 of the sample data 32 comprises modifying one or more properties of the feature annotations 34 from the group comprising feature location, feature shape, feature number.
7. The method of any one of the preceding clauses, wherein the modifications of the feature annotations 34 are configured to generate at least some feature annotations 42 that are underrepresented in the sample data 32.
8. The method of any one of the preceding clauses, wherein at least some of the feature annotations 34 are modified automatically.
9. The method of any one of the preceding clauses, wherein at least some of the feature annotations 34 are modified using an auxiliary machine learning model, the auxiliary machine learning model being trained to map feature annotations 34 to modified feature annotations 42.
10. The method of any one of the preceding clauses, wherein the generative machine learning model 40 receives the sample image 12 corresponding to the feature annotations 34 before modification as further conditioning input 38, and wherein the generative machine learning model 40 is trained to inpaint the sample image 12 only within a region 39 comprising the modifications of the feature annotations 34 to generate the training image 44.
11. The method of any one of the preceding clauses, further comprising a quality review of the generated training data.
12. The method of any one of the preceding clauses, wherein the generated training data 54 further comprises images 12 and corresponding feature annotations 34 of the sample data 32.
13. The method of any one of the preceding clauses, wherein the generated training data 54 is configured for training a machine learning model 45 for quality inspection.
14. A method for training a machine learning model 45 for feature identification in an image 12, the machine learning model 45 being trained using training data 54 at least partially generated using a computer implemented method 28 for generating training data 54 according to any one of the preceding clauses.
15. A method for feature identification in an image comprising: applying a machine learning model 45 for feature identification to the image 12, the machine learning model 45 being trained using training data 54 at least partially generated using a computer implemented method 28 for generating training data 54 according to any one of clauses 1 to 13.
16. A computer program comprising instructions which, when the program is executed by a computer, cause the computer to carry out a computer implemented method 28 for generating training data 54 of any one of the preceding clauses.
17. A computer-readable medium, on which a computer program executable by a computing device is stored, the computer program comprising code for executing a computer implemented method 28 for generating training data 54 of any one of the preceding clauses.
18. A data carrier signal carrying the computer program of clause 16.
19. A data processing apparatus 56 for generating training data 54 for training a machine learning model 45 for feature identification in an image 12, the data processing apparatus 56 comprising:
   - one or more processing devices 58;
   - one or more machine-readable hardware storage devices 60 comprising instructions that are executable by one or more processing devices 58 to perform operations comprising a computer implemented method 28 for generating training data 54 for training a machine learning model 45 for feature identification according to any one of clauses 1 to 13.
20. The data processing apparatus of clause 19, further comprising a user interface 62 that is configured for allowing a user to select and/or modify feature annotations 34 of the sample data 32.

In summary, the invention relates to a computer implemented method for generating training data 54 for training a machine learning model 45 comprising: providing a generative machine learning model 40 that uses feature annotations 34 as conditioning input 33 to generate a corresponding image 12, the generative machine learning model 40 being trained using sample data 32 comprising images 12 and corresponding feature annotations 34; modifying feature annotations 34 of the sample data 32; generating training data 54 using the modified feature annotations 42 as conditioning input 33 of the trained generative machine learning model 40, the training data 54 being configured for training a machine learning model 45 for feature identification. The invention also relates to a corresponding computer program, computer-readable medium, data carrier signal and data processing apparatus.

### Reference number list

- 10: Object
- 12: Image
- 14: Anode
- 16: Cathode
- 18: Too long cathode
- 20: Too long or bent electrode
- 22: Electrode gap
- 24: Biological sample
- 26: Defect
- 28: Computer implemented method
- 30: Data flowchart
- 32: Sample data
- 33: Conditioning input
- 34: Feature annotations
- 36: Categories
- 38: Further conditioning input
- 39: Region
- 40: Generative machine learning model
- 42: Modified feature annotation
- 44: Training image
- 45: Machine learning model for feature identification
- 46: Overlay
- 48: User
- 50: Accept
- 52: Reject
- 54: Training data
- 56: Data processing apparatus
- 58: Processing device
- 60: Machine-readable hardware storage device
- 62: User interface

## Claims

1. A computer implemented method (28) for generating training data (54) for training a machine learning model (45), the method comprising:
- Providing a generative machine learning model (40) that uses feature annotations (34) as conditioning input (33) to generate a corresponding image (12), the generative machine learning model (40) being trained using sample data (32) comprising images (12) and corresponding feature annotations (34);
- Modifying feature annotations (34) of the sample data (32);
- Generating training data (54) using the modified feature annotations (42) as conditioning input (33) of the trained generative machine learning model (40), the training data (54) being configured for training a machine learning model (45) for feature identification.

2. The method of claim 1, wherein the generative machine learning model (40) uses one or more further conditioning inputs (38) to guide the image generation process.

3. The method of claim 2, wherein one or more further conditioning inputs (38) of the generative machine learning model (40) describe additional modifications of the feature annotations (34).

4. The method of claim 2 or 3, wherein at least some of the sample data (32) is assigned to one or more categories (36), and wherein the one or more categories (36) are used to generate one or more conditioning inputs (33) of the generative machine learning model (40).

5. The method of any one of the preceding claims, further comprising generating feature annotations (42) that are underrepresented in the sample data (32) and using the generated feature annotations (42) as conditioning input (33) of the trained generative machine learning model (40) to generate training images (44).

6. The method of any one of the preceding claims, wherein modifying feature annotations (34) of the sample data (32) comprises modifying one or more properties of the feature annotations (34) from the group comprising feature location, feature shape, feature number.

7. The method of any one of the preceding claims, wherein at least some of the feature annotations (34) are modified automatically.

8. The method of any one of the preceding claims, further comprising a quality review of the generated training data.

9. The method of any one of the preceding claims, wherein the generated training data (54) further comprises images (12) and corresponding feature annotations (34) of the sample data (32).

10. A method for training a machine learning model (45) for feature identification in an image (12), the machine learning model (45) being trained using training data (54) at least partially generated using a computer implemented method (28) for generating training data (54) according to any one of the preceding claims.

11. A method for feature identification in an image comprising: applying a machine learning model (45) for feature identification to the image (12), the machine learning model (45) being trained using training data (54) at least partially generated using a computer implemented method (28) for generating training data (54) according to any one of claims 1 to 9.

12. A computer program comprising instructions which, when the program is executed by a computer, cause the computer to carry out a computer implemented method (28) for generating training data (54) of any one of the preceding claims.

13. A computer-readable medium, on which a computer program executable by a computing device is stored, the computer program comprising code for executing a computer implemented method (28) for generating training data (54) of any one of the preceding claims.

14. A data carrier signal carrying the computer program of claim 12.

15. A data processing apparatus (56) for generating training data (54) for training a machine learning model (45) for feature identification in an image (12), the data processing apparatus (56) comprising:
- one or more processing devices (58);
- one or more machine-readable hardware storage devices (60) comprising instructions that are executable by one or more processing devices (58) to perform operations comprising a computer implemented method (28) for generating training data (54) for training a machine learning model (45) according to any one of claims 1 to 9.

## Amended claims

### Amended claims in accordance with Rule 137(2) EPC.

1. A computer implemented method (28) for generating training data (54) for training a machine learning model (45), the method comprising:
- Providing a generative machine learning model (40) that uses feature annotations (34) as conditioning input (33) to generate a corresponding image (12), the generative machine learning model (40) being trained using sample data (32) comprising images (12) and corresponding feature annotations (34);
- Geometrically modifying feature annotations (34) of the sample data (32);
- Generating training data (54) using the modified feature annotations (42) as conditioning input (33) of the trained generative machine learning model (40), the training data (54) being configured for training a machine learning model (45) for feature identification.

2. The method of claim 1, wherein the generative machine learning model (40) uses one or more further conditioning inputs (38) to guide the image generation process.

3. The method of claim 2, wherein one or more of the further conditioning inputs (38) of the generative machine learning model (40) describe additional modifications of the feature annotations (34).

4. The method of claim 2 or 3, wherein at least some of the sample data (32) is assigned to one or more categories (36), and wherein the one or more categories (36) are used to generate one or more of the further conditioning inputs (33) of the generative machine learning model (40).

5. The method of any one of claims 2 to 4, wherein one or more of the further conditioning inputs (33) of the generative machine learning model (40) comprise text prompts.

6. The method of any one of the preceding claims, further comprising generating feature annotations (42) that are underrepresented in the sample data (32) and using the generated feature annotations (42) as conditioning input (33) of the trained generative machine learning model (40) to generate training images (44).

7. The method of claim 6, wherein underrepresented feature annotations in the sample data (32) are identified by (i) fitting a statistical or machine learning model to the sample data or to properties derived therefrom, and (ii) generating feature annotations from regions of low probability as determined by the fitted model.

8. The method of any one of the preceding claims, wherein the feature annotations (34) comprise at least one of: a pixel-wise labeling of one or more features in the image, a region encompassing one or more features in the image or an image-level label indicating the presence or absence of a feature in the image.

9. The method of any one of the preceding claims, wherein the feature annotations (34) are modified comprising at least one of: feature annotation displacement, feature annotation deformation, feature annotation mirroring, feature annotation addition, feature annotation removal, feature annotation duplication or feature annotation simulation.

10. The method of any one of the preceding claims, wherein modifying feature annotations (34) of the sample data (32) comprises modifying one or more properties of the feature annotations (34) from the group comprising feature annotation location, feature annotation shape, feature annotation number.

11. The method of any one of the preceding claims, wherein at least some of the feature annotations (34) are modified using an auxiliary machine learning model, the auxiliary machine learning model being trained to map feature annotations (34) to modified feature annotations (42).

12. The method of any one of the preceding claims, wherein the generated training data (54) further comprises images (12) and corresponding feature annotations (34) of the sample data (32).

13. A method for training a machine learning model (45) for feature identification in an image (12), the machine learning model (45) being trained using training data (54) at least partially generated using a computer implemented method (28) for generating training data (54) according to any one of the preceding claims.

14. A method for feature identification in an image comprising: applying a machine learning model (45) for feature identification to the image (12), the machine learning model (45) being trained using training data (54) at least partially generated using a computer implemented method (28) for generating training data (54) according to any one of claims 1 to 12.

15. A computer program comprising instructions which, when the program is executed by a computer, cause the computer to carry out a computer implemented method (28) for generating training data (54) of any one of claims 1 to 12.

16. A computer-readable medium, on which a computer program executable by a computing device is stored, the computer program comprising code for executing a computer implemented method (28) for generating training data (54) of any one of claims 1 to 12.

17. A data carrier signal carrying the computer program of claim 15.

18. A data processing apparatus (56) for generating training data (54) for training a machine learning model (45) for feature identification in an image (12), the data processing apparatus (56) comprising:
- one or more processing devices (58);
- one or more machine-readable hardware storage devices (60) comprising instructions that are executable by one or more processing devices (58) to perform operations comprising a computer implemented method (28) for generating training data (54) for training a machine learning model (45) according to any one of claims 1 to 12.
